# FASCICULE DE BREVET EUROPEEN

(11) **EP 2 454 007 B1**
(45) Date de publication et mention de la délivrance du brevet: **02.08.2017**
(21) Numéro de dépôt: 10734477.2
(22) Date de dépôt: 13.07.2010
(51) Int. Cl.: B01D 53/64, B01D 53/70, B01J 20/12, B01J 20/28, B01J 20/04, B01J 20/10, B01J 20/30, B01J 20/32, B01J 21/16, B01J 35/00, B01J 35/10, B01J 37/02, B01J 20/02

(54) **COMPOSITION SOLIDE MINERALE, SON PROCEDE DE PREPARATION ET SON UTILISATION EN ABATTEMENT DE DIOXINES ET METAUX LOURDS DES GAZ DE FUMEES**
FESTE ANORGANISCHE ZUSAMMENSETZUNG, HERSTELLUNGSVERFAHREN DAFÜR UND IHRE VERWENDUNG ZUR REDUKTION VON DIOXINEN UND SCHWERMETALLEN IN ABGASEN
SOLID INORGANIC COMPOSITION, METHOD FOR PREPARING SAME, AND USE THEREOF FOR REDUCING DIOXINS AND HEAVY METALS IN FLUE GASES

(30) Priorité: 13.07.2009 BE 200900427; 07.05.2010 US 332254 P
(43) Date de publication de la demande: 23.05.2012
(73) Titulaire: S.A. LHOIST RECHERCHE ET DEVELOPPEMENT, 1342 Ottignies-Louvain-la-Neuve (BE); Université de Liège, 4031 Angleur (Liege) (BE)
(72) Inventeur: BRASSEUR, Alain, B-4460 Grâce-Hollogne (BE); PIRARD, Jean-Paul, B-4032 Liège (Chenée) (BE); LAUDET, Alain, B-5000 Namur (BE)
(74) Mandataire: Coulon, Ludivine
(86) Numéro de dépôt international: PCT/EP2010/060075
(87) Numéro de publication internationale: WO 2011/006898

(56) Documents cités:
- WO-A2-2006/099291
- BE-A3- 1 015 949
- DE-A1- 10 228 459
- DE-A1- 19 824 237
- FR-A- 1 481 646
- JP-A- 1 155 930
- JP-A- 59 160 534
- US-A1- 2009 297 413

## Description

La présente invention se rapporte à une composition d'abattement de métaux lourds et de dioxines dans les gaz de fumées comprenant une matière solide de sorption qui est un composé minéral, de préférence non fonctionnalisé.

Les dioxines et furanes ainsi que les métaux lourds, notamment le mercure, sont des composés toxiques, présents dans les gaz de fumées, notamment à l'état gazeux et dont l'émission est en général strictement réglementée. Au sens de l'invention, le mot « dioxine » sera utilisé dans le sens générique, incluant les dioxines ainsi que les furanes et, éventuellement, d'autres composés analogues, notamment les précurseurs des dioxines et furanes, comme les hydrocarbures aromatiques polycycliques (HAP). En effet, les normes en la matière regroupent en général l'ensemble des dioxines (75 espèces) et furanes (135 espèces) en une seule concentration «toxique équivalente » (TEQ), exprimée par rapport à la molécule de dioxine la plus toxique.

Par les termes "métaux lourds", on entend principalement les métaux ayant une densité supérieure à 5000 kg/m³, notamment les métaux lourds les plus courants, faisant généralement l'objet d'une réglementation, à savoir le plomb, le chrome, le cuivre, le manganèse, l'antimoine, l'arsenic, le cobalt, le nickel, le vanadium, le cadmium, le thallium et le mercure, de préférence le plomb, le thallium, le cadmium et le mercure, en particulier, le mercure. Ces métaux peuvent se présenter à l'état élémentaire ou sous forme ionique.

L'abattement de dioxines et de métaux lourds présents dans les gaz de fumées est généralement dans l'état de la technique opéré au moyen de composés carbonés, tels que les charbons actifs, cokes de lignite ou analogues. Le choix du ou des types de composés carbonés dépend de la prédominance des dioxines, d'une part ou des métaux lourds, d'autre part, dans les polluants à abattre et des réglementations respectives à satisfaire pour ces deux types de polluants.

Par exemple, le document WO 2006/099291 divulgue l'abattement de mercure des gaz de fumées en utilisant un adsorbant catalytique sous la forme d'un composé carboné dopé par des composés halogénés. Plus particulièrement, un sel d'halogénure est dispersé sur du charbon actif et l'activité d'oxydation catalytique du charbon actif favorise la formation d'halogénure de mercure. Un oxydant oxyde le mercure et l'anion du composé dopant procure un contre-ion pour l'ion mercure oxydé par l'oxydant. Comme on le constate, la présence d'un oxydant est donc essentielle dans ce type de composé.

Dans de nombreuses situations, en particulier dans le cas des unités d'incinération de déchets, les émissions initiales de dioxines et de certains métaux lourds sont supérieures, parfois largement, à la réglementation en vigueur, de sorte qu'il faut absolument abattre, parfois considérablement, ces deux types de polluants. Un même composé carboné bien choisi peut alors convenir pour le respect simultané de la réglementation en vigueur pour les rejets en métaux lourds et de celle relative aux rejets en dioxines. Il peut être mis en oeuvre soit tel quel, soit en mélange avec un réactif basique, en lit fixe sous forme granulaire ou par injection dans le gaz sous forme pulvérulente ; les particules solides sont alors piégées en aval, par exemple dans un filtre textile, où leur action est prolongée.

L'efficacité des composés carbonés pour abattre les métaux lourds et dioxines est unanimement reconnue. Néanmoins, l'emploi de ces composés carbonés dans les gaz de fumées présente deux inconvénients majeurs :
- l'augmentation de la teneur en carbone organique total dans les poussières présentes au niveau du rejet de ces fumées, teneur en carbone qui est sévèrement réglementée ;
- le risque d'inflammabilité, d'autant plus important que la température des gaz à épurer est élevée.

Une amélioration apportée par l'homme du métier pour résoudre les problèmes d'ignition des composés carbonés a été de les utiliser en mélange avec des substances ininflammables, tels que la chaux. Malheureusement, cette amélioration a effectivement réduit les risques d'ignition des composés carbonés mais ne les a pas complètement supprimés. En effet, des points chauds peuvent encore apparaître, même à basse température (par exemple 150°C), notamment en présence d'infiltration d'air dans des zones où les composés carbonés font l'objet d'accumulation.

Les composés carbonés sont en général des composés coûteux et l'étape mettant en oeuvre lesdits composés carbonés s'intègre difficilement dans un procédé complet de traitement des gaz de fumées, qui doit souvent éliminer également les polluants azotés. L'élimination des oxydes d'azote par voie catalytique est généralement pratiquée à une température de gaz supérieure à 200°C, non compatible avec l'usage de composés carbonés. Pour une bonne compatibilité avec une étape du procédé utilisant les composés carbonés, il faut alterner refroidissement des gaz de fumées et chauffage de ces derniers. Ceci représente une perte énergétique importante et un surcoût. Il est donc difficile d'intégrer les composés carbonés dans un procédé de traitement de fumées, étant donné les problèmes d'ignition que ces composés provoquent.

Les documents "ES 8704428" ou "ES 2136496", et "GIL, ISABEL GUIJARRO ; ECHEVERRIA, SAGRARIO MENDIOROZ ; MARTIN-LAZARO, PEDRO JUAN BERMEJO ; ANDRES, VICENTA MUNOZ, Mercury removal from gaseous streams. Effects of adsorbent geometry, Revista de la Real Academia de Ciencias Exactas, Fisicas y Naturales (Espana) (1996), 90 (3), pp. 197-204" mentionnent qu'il est possible de s'affranchir du carbone pour l'abattement des métaux lourds, en particulier du mercure, par l'utilisation de soufre comme réactif. Le soufre est déposé sur un support minéral, tels que des silicates naturels. De telles formulations pallient ainsi les inconvénients précités des composés carbonés. Dans ce cas, le silicate est considéré comme un support inerte par rapport au polluant à abattre ; ce dernier est piégé par réaction avec le composé soufré pour former en général un sulfure.

Malheureusement, les silicates fonctionnalisés par des composés soufrés font l'objet d'une fabrication dangereuse, lourde et coûteuse qui pénalise son utilisation. Par exemple, le document ES 8704428 divulgue une sulfurisation d'un silicate par une réaction d'oxydation d'acide sulfhydrique à une proportion molaire bien définie dans le but d'adsorber du soufre élémentaire sur ledit silicate. La manipulation d'acide sulfhydrique, très toxique et extrêmement inflammable, est dangereuse et la proportion molaire stricte nécessaire pour éviter toute réaction d'oxydation ultérieure est très contraignante. Le document "ES 2136496" apporte un enseignement similaire, décrivant un procédé de sulfuration de silicates naturels pour retenir les vapeurs de métaux.

On remarque que les substituts aux composés carbonés décrits ci-dessus sont limités à l'abattement des métaux lourds.

D'autres compositions alternatives aux composés carbonés telles que mentionnées au début, sont décrites pour l'abattement des dioxines, en particulier l'utilisation de minéral du type sépiolite ou analogue non fonctionnalisé (voir notamment JP 2000140627, JP 2001276606 et JP 2003024744). Cependant, tous les phyllosilicates n'apparaissent pas de bons solides de sorption pour les dioxines. Par exemple, la montmorillonite 'Japanese Acid Clay' (JAC), la montmorillonite K10 et le kaolin 'China Clay' ne captent pas ou peu le chlorobenzène ou d'autres molécules modèles utilisées en raison de leurs analogies avec les dioxines (Chemosphere, 56 8, 745-756 (2004)).

On connait également du document FR 1481646 des compositions adsorbantes siliceuses obtenues par réaction, notamment avec de l'acide chlorhydrique à haute concentration, destinées à l'adsorption de gaz ou de liquides,. Dans ces compositions, le composé de départ a réagi pour être transformé en un composé amorphe qui ne conserve donc pas sa structure cristalline initiale. Ce document divulgue en outre les composés obtenus sous forme composite. Par ailleurs, les résultats d'abattement mentionnés dans les exemples sont uniquement relatifs à des liquides comme l'eau ou à des gaz comme l'oxygène ou éventuellement le butane ou analogue.

Le document DE 198 24 237 divulgue quant à lui des composés minéraux auxquels sont ajoutés des additifs pour capter le mercure. Les additifs divulgués sont généralement des composés soufrés, fournissant en cela un enseignement similaire aux références espagnoles précitées. Il est également fait mention de l'utilisation de chlorites qui sont des phyllosilicates minéraux du groupe des chlorites.

Comme on le voit, l'art antérieur prévoit des substituts aux composés carbonés pour l'épuration des gaz de fumées mais les solutions proposées ont pour objet soit l'abattement des dioxines, soit l'abattement des métaux lourds.

Le brevet EP 1732668 B1 prévoit l'utilisation de composés minéraux non fonctionnalisés du groupe "palygorskite-sépiolite" selon la classification de Dana pour l'abattement de métaux lourds, en particulier de mercure. Cependant, l'efficacité de la sépiolite pour l'abattement de mercure apparaît limitée, en comparaison des charbons actifs, nécessitant a priori un surdosage.

L'invention a pour but de remédier aux inconvénients de l'art antérieur, en procurant une composition telle que mentionnée au début dans laquelle le dit composé minéral est choisi parmi les phyllosilicates du groupe "palygorskite-sépiolite" selon la classification de Dana, ledit composé minéral étant dopé par un sel d'halogénure et conservant sa structure cristalline initiale, ledit sel d'halogénure étant présent en une quantité sur base sèche allant de 0,5% à 20% en poids sur la base du poids de la composition.

En effet, il a été observé de manière très inattendue et non prévisible que ce composé minéral dopé par un halogénure sous forme de sel permettait un abattement conjoint et efficace de dioxines et de métaux lourds, notamment à l'état gazeux, présents dans les gaz de fumées, en utilisant un seul et même composé minéral, dont la fabrication et la mise en oeuvre sont simples et non dangereuses.

L'effet de cette composition selon l'invention sur le taux d'abattement des dioxines et des métaux lourds est particulièrement inattendu pour les raisons suivantes. Les mesures de la surface spécifique BET et du volume poreux BJH, effectuées directement sur le composé minéral dopé, montrent une diminution parfois significative de ces 2 caractéristiques, du moins à forte teneur en sel dopant. Par ailleurs, on conçoit que la cristalisation d'un sel sur un support poreux devrait modifier l'accessibilité aux pores pour les molécules de grande dimension comme les dioxines. Enfin, le recouvrement de la surface d'un solide poreux, même partiel, par un composé de nature différente, est suceptible de modifier la capacité d'adsober des molécules comme les dioxines. Ces éléments laissent présager un risque de réduction des performances d'abattement du composé minéral dopé par rapport au composé minéral non dopé, puisqu'il est connu que les capacités d'abattement de dioxines et de métaux lourds sont directement influencés par les éléments précités. Le composé minéral est choisi dans le groupe des phyllosilicates du sous-groupe de la sépiolite selon la classification de Dana.

Les phyllosilicates visés par l'invention présentent une porosité élevée, typiquement un volume poreux compris entre 0,20 et 0,60 cm³/g, notamment entre 0,25 et 0,40 cm³/g, mesurés par la méthode BJH, appliquée à l'isotherme de désorption d'azote, obtenue à la température de l'azote liquide (77 K). Cet intervalle de volume poreux vaut pour les pores de taille comprise entre 2 et 100 nanomètres. Par ailleurs, ces phyllosilicates présentent typiquement une surface spécifique de 100 à 200 m²/g, particulièrement de 110 à 160 m²/g.

Par « composé minéral dopé par un sel d'halogénure », on entend un composé minéral précité, dont la surface accessible aux gaz de fumées est partiellement ou complètement couverte par un sel d'halogénure.

La surface accessible au gaz comprend non seulement la surface externe des particules constitutives du composé minéral mais également une partie ou l'ensemble de la surface interne de ces particules, partiellement poreuses.

Le composé minéral dopé par un sel d'halogénure contient, sur base sèche, de 0,5% à 20%, de préférence de 1 % à 15 %, en particulier de 1,5 % à 10 % en poids de sel d'halogénure sur la base du poids de la composition selon l'invention. Le sel d'halogénure peut être un halogénure alcalin ou alcalino-terreux, notamment NaCl, NaBr ou Nal, KCl, KBr ou KI, CaCl₂, CaBr₂ ou Cal₂, MgCl₂, MgBr₂ ou Mgl₂, ou encore NH₄Cl, NH₄Br ou NH₄I ou un de leurs mélanges.

Dans une forme de réalisation particulière selon l'invention, le composé minéral dopé par ledit sel d'halogénure présente une surface spécifique BET comprise entre 70 et 170 m²/g, souvent entre 80 et 140 m²/g et en particulier entre 90 et 130 m²/g.

De préférence, le composé minéral dopé par ledit sel d'halogénure présente un volume poreux compris entre 0,15 et 0,32 cm³/g, de préférence entre 0,20 et 0,30 cm³/g et de manière plus préférentielle entre 0,22 et 0,28 cm³/g, mesuré par la méthode BJH, appliquée à l'isotherme de désorption d'azote, obtenue à une température d'azote liquide d'environ 77 K pour des pores de taille comprise entre 2 et 100 nm.

Avantageusement, le composé minéral selon l'invention est sous forme pulvérulente, à savoir que la taille des particules est majoritairement (à plus de 90 %) inférieure à 1 mm et essentiellement supérieure à 1 µm, c'est-à-dire qu'elle présente de préférence un d₉₀ inférieur à 1 mm.

Par d₉₀ on entend la valeur interpolée de la courbe de distribution des tailles de particules, telle que 90 % des particules ont une dimension inférieure à ladite valeur.

De façon inattendue, on a pu mettre en évidence que ces composés minéraux ainsi dopés par un sel d'halogénure permettent d'abattre avec une grande efficacité les métaux lourds, notamment à l'état gazeux, en particulier le mercure et tout particulièrement le mercure métallique Hg°, dans les gaz de fumées, tout en préservant les propriétés d'abattement des dioxines que ces composés minéraux possèdent en l'absence de dopage, en particulier en conservant la structure cristalline initiale.

D'autres formes de réalisation du produit selon l'invention sont indiquées dans les revendications annexées.

La présente invention a également pour objet un procédé de préparation d'une composition solide minérale selon l'invention. Ce procédé comprend les étapes de :
- alimentation d'une matière solide de sorption qui est un composé minéral, de préférence non fonctionnalisé, choisi parmi les phyllosilicates du groupe " palygorskite-sépiolite " selon la classification de Dana,
- alimentation en un sel d'halogénure, et
- mise en contact dudit composé minéral et dudit sel d'halogénure avec formation d'un composé minéral dopé au sel d'halogénure.

Avantageusement, ladite mise en contact dudit composé minéral et dudit sel d'halogénure est réalisée sous agitation.

De préférence, ledit composé minéral alimenté présente une humidité comprise entre 0,1 et 100 g/kg, avantageusement entre 2 et 90 g/kg.

Avantageusement, ladite mise en contact est effectuée à température ambiante.

Dans une forme de réalisation préférentielle du procédé selon l'invention, ledit sel d'halogénure est sous forme liquide, en phase aqueuse.

En outre, ladite étape de mise en contact dudit composé minéral et dudit sel d'halogénure est avantageusement une pulvérisation dudit sel d'halogénure sur ledit composé minéral, éventuellement en présence d'une agitation.

Dans une forme de réalisation préférentielle alternative du procédé selon l'invention, ladite étape de mise en contact dudit composé minéral et dudit sel d'halogénure est un trempage en une ou plusieurs étapes, éventuellement sous agitation et éventuellement avec étapes de séchage et/ou désagglomération intermédiaires, dudit composé minéral dans ledit sel d'halogénure en phase liquide.

De préférence, ledit sel d'halogénure en phase liquide, est une solution, aqueuse, présentant une teneur de sel d'halogénure comprise entre 1 % et la saturation en sel de la solution, notamment entre 1 % et 30 %, en particulier entre 5% et 27%, de préférence entre 10 % et 27 % en poids par rapport au poids total de ladite solution. Il faut remarquer qu'une faible concentration en sel dans la solution conduit à une mise en oeuvre plus difficile du mélange ainsi qu'à un séchage ultérieur plus onéreux. Par ailleurs, la concentration de la solution est limitée par la solubilité du sel. La mise en contact du sel d'halogénure et du composé minéral est opérée de façon à favoriser la répartition la plus homogène possible du sel d'halogénure sur la surface externe mais aussi interne accessible du composé minéral.

Avantageusement, le procédé selon l'invention comprend en outre une étape de séchage et/ou de désagglomération dudit composé minéral dopé au sel d'halogénure, de préférence selon des conditions opératoires (température de l'ambiance, temps de séjour...) telles que le composé minéral dopé atteigne une température comprise entre 60 et 200°C, en particulier entre 75 et 170°C, en vue d'atteindre une humidité résiduelle de préférence inférieure à 100 g/kg, avantageusement inférieure à 50 g/kg.

Comme mentionné précédemment, de préférence, dans le procédé selon l'invention, ledit sel d'halogénure est un halogénure alcalin, un halogénure alcalino-terreux ou analogue, de préférence choisi dans le groupe constitué de NaCl, NaBr, Nal, KCI, KBr, KI, CaCl₂, CaBr₂, Cal₂, MgCl₂, MgBr₂, Mgl₂, NH₄Cl, NH₄Br ou NH₄I ou leurs mélanges.

D'autres formes de réalisation du procédé suivant l'invention sont indiquées dans les revendications annexées.

La présente invention se rapporte en outre à une utilisation d'une composition solide minérale telle que décrite ci-dessus, pour l'abattement des dioxines et des métaux lourds, notamment à l'état gazeux, en particulier de mercure et tout particulièrement de mercure métallique Hg°, présents dans les gaz de fumées, par mise en contact des gaz de fumées avec la composition solide minérale précitée et à une utilisation d'un mélange de réactif basique et de ladite composition solide minérale pour le traitement des gaz de fumées.

Le composé minéral dopé selon l'invention est donc mis en contact avec le gaz de fumées à traiter, soit tel quel, soit en association avec un agent basique couramment utilisé pour l'abattement des gaz acides des fumées, tels que la chaux ou analogues.

Dès lors, la mise en oeuvre de la composition solide minérale selon l'invention ne nécessite que l'obtention d'un produit simple d'utilisation, de préférence sec.

L'utilisation du composé minéral dopé selon l'invention pour l'abattement de dioxines et métaux lourds comprend donc une mise en contact dudit composé minéral dopé, de préférence à l'état sec, réalisée à une température comprise dans la plage allant de 70 à 350°C, de préférence entre 110 et 300°C et de manière plus préférentielle entre 120 et 250°C. La possibilité d'opérer à des températures voisines ou supérieures à 200°C permet de maintenir une température relativement constante tout au long du procédé de traitement des gaz de fumée et d'éviter ou de limiter les étapes de refroidissement et de chauffage consécutives pour l'élimination des dioxines et métaux lourds puis, celle des composés azotés par catalyse.

Avantageusement, le composé minéral selon l'invention est utilisé sous forme pulvérulente, à savoir que la taille des particules est majoritairement (à plus de 90 %) inférieure à 1 mm et essentiellement supérieure à 1 µm. Le composé minéral est alors injecté par voie pneumatique dans la veine gazeuse.

L'utilisation du composé minéral dopé selon l'invention pour l'abattement de dioxines et métaux lourds dans les gaz de fumées est souvent à intégrer dans un traitement complet de gaz de fumées. Un tel traitement comprend une étape d'élimination des polluants acides majoritaires par mise en contact desdits gaz de fumées avec des réactifs basiques. D'une manière générale, les polluants acides majoritaires dans les gaz de fumées comprennent les acides chlorhydrique, fluorhydrique, les oxydes de soufre ou encore les oxydes d'azote, leurs teneurs à l'émission dans les gaz de fumées avant traitement sont de l'ordre de plusieurs dizaines à plusieurs centaines de mg/Nm³.

Lorsque l'utilisation du composé minéral dopé selon l'invention pour l'abattement de dioxines et métaux lourds dans les gaz de fumées est intégrée dans un traitement complet de gaz de fumées, lesdits réactifs basiques, par exemple, la chaux, et ledit composé minéral dopé sont mis en oeuvre séparément ou en mélange. Ce dernier cas permet un gain d'investissement et d'espace puisque dès lors deux étapes peuvent être réalisées simultanément et au même endroit.

D'autres utilisations selon l'invention sont mentionnées dans les revendications annexées.

D'autres caractéristiques, détails et avantages de l'invention ressortiront de la description donnée ci-après, à titre non limitatif et en faisant référence aux exemples.

L'invention va maintenant être décrite plus en détail au moyen d'exemples non limitatifs.

Les exemples 1 à 7 et l'exemple comparatif sont des essais à l'échelle du laboratoire, selon la procédure expérimentale suivante. Le composé minéral dopé par un sel d'halogénure (exemples 1 à 5, selon l'invention) ou non dopé (exemple comparatif) sont placés au centre d'un réacteur cylindrique de 110 mm de long et 10 mm de diamètre intérieur de manière à constituer un lit homogène sur de la laine de roche, ce qui correspond à environ 0,1 g de composé minéral. Un courant d'azote contenant 600 µg/Nm³ de mercure métallique (Hg°), avec un débit total de 2,8 10⁻⁶ Nm³/s traverse ce lit. Un détecteur VM-3000 de *Mercury Instruments* permet de mesurer le taux de mercure métallique, à la sortie du réacteur. Préalablement à son arrivée au niveau du détecteur, le gaz traverse une solution de SnCl₂, de façon à convertir en mercure métallique l'éventuelle fraction du mercure présente sous forme ionique. De la sorte, la totalité du mercure est mesurée. Ce dispositif permet d'évaluer la capacité d'abattement du mercure par un solide en appliquant le principe de la courbe de percée. La capacité d'abattement est exprimée en (µg Hg)/g de solide. Le Tableau 1 synthétise le mode de préparation et les performances d'abattement du mercure pour les exemples 1 à 5 et l'exemple comparatif.

### Exemple comparatif

On place de la sépiolite de qualité industrielle, disponible dans le commerce, dans le réacteur décrit ci-dessus. On réalise une courbe de percée à une température fixe de 130°C. La capacité d'abattement du mercure de cette sépiolite non dopée dans le dispositif précédemment décrit est de 9 (µg Hg)/ g de sépiolite.

### Exemple 1

On réalise selon l'invention le trempage d'une sépiolite analogue à celle de l'exemple comparatif. Ce trempage est réalisé en immergeant la sépiolite dans une solution aqueuse d'une teneur de 10 % en poids de KBr par rapport au poids de la solution aqueuse. La sépiolite humide ainsi dopée est séchée et désagglomérée, à une température de 75°C dans une étuve, de façon à atteindre une humidité résiduelle inférieure à 50 g/kg. La quantité de KBr déposée sur la sépiolite après séchage est de 10 % en poids par rapport au poids de la composition obtenue selon l'invention. La capacité d'abattement du mercure de cette sépiolite dopée au KBr selon l'invention dans le dispositif précédemment décrit et fonctionnant dans les mêmes conditions opératoires qu'à l'exemple comparatif, est de 255 (µg Hg)/ g de sépiolite dopée.

### Exemple 2

On réalise selon l'invention, une pulvérisation d'une sépiolite analogue à celle de l'exemple comparatif. La pulvérisation est réalisée à partir d'une solution aqueuse d'une teneur de 27 % en poids de NaCl par rapport au poids de la solution aqueuse. La solution est pulvérisée sur la sépiolite sous agitation mécanique, jusqu'à obtenir une humidité de 20 %. La sépiolite humide ainsi dopée est séchée et désagglomérée, à une température de 150°C dans une étuve, de façon à atteindre une humidité résiduelle inférieure à 50 g/kg. La quantité de NaCl déposée sur la sépiolite après séchage est de 6 % exprimée en poids par rapport au poids de la composition. La capacité d'abattement du mercure de cette sépiolite dopée au NaCl est égale à 48 (µg Hg)/ g de sépiolite dopée.

### Exemple 3

L'exemple 2 est reproduit mais avec solution à 27 % en poids de MgCl₂ par rapport au poids de la solution aqueuse. La quantité de MgCl₂ déposée sur la sépiolite après séchage est de 5 % exprimée en poids par rapport au poids de la composition. La capacité d'abattement du mercure mesurée est égale à 190 (µg Hg)/ g de sépiolite dopée.

### Exemple 4

L'exemple 2 est reproduit mais avec solution à 27 % en poids de CaBr₂ par rapport au poids de la solution aqueuse. La quantité de CaBr₂ déposée sur la sépiolite après séchage est de 6 % exprimée en poids par rapport au poids de la composition. La capacité d'abattement du mercure mesurée est égale à 343 (µg Hg)/ g de sépiolite dopée.

### Exemple 5

L'exemple 2 est reproduit mais avec solution à 27 % en poids de MgBr₂ par rapport au poids de la solution aqueuse, la quantité de MgBr₂ déposée sur la sépiolite après séchage est de 7 % exprimée en poids par rapport au poids de la composition. La capacité d'abattement du mercure mesurée est égale à 1770 (µg Hg)/ g de sépiolite dopée.

**Tableau 1 - Synthèse des essais en laboratoire**

| Exemple | comparatif | 1 | 2 | 3 | 4 | 5 |
|---|---|---|---|---|---|---|
| Additif | aucun | KBr | NaCl | MgCl₂ | CaBr₂ | MgBr₂ |
| Solution de départ | - | 10 % | 27 % | 27 % | 27 % | 27 % |
| Mode de dopage | - | Trempage | Pulv. | Pulv. | Pulv. | Pulv. |
| Humidité après imprégnation | - | 50 % | 20 % | 20 % | 20 % | 20 % |
| Température de séchage | - | 75°C | 150°C | 150°C | 150°C | 150°C |
| Taux d'additif imprégné | - | 10 % | 6 % | 5 % | 6 % | 7 % |
| Abattement mercure | | | | | | |
| (µg Hg/g) | 9 | 255 | 48 | 190 | 343 | 1770 |

### Exemple 6 : Influence de la température du réacteur

L'exemple 4 est reproduit mais la quantité de CaBr₂ déposée sur la sépiolite après séchage est de 2 % exprimée en poids par rapport au poids de la composition. On réalise une courbe de percée à des températures fixes de 130°C, 180°C ; 200°C, 250°C et 300°C. La capacité d'abattement du mercure mesurée est respectivement égale à 208, 426, 582, 750 et 672 (µg Hg)/ g de sépiolite dopée dans les conditions de l'essai. Ces résultats démontrent l'utilisation avantageuse des compositions dopées selon l'invention, notamment entre 180°C et 300°C.

### Exemple 7 - effet de la concentration de la solution dopante

On répète l'exemple 2 en imprégnant 4 échantillons de sépiolite analogue à celle de l'exemple comparatif par pulvérisation avec des solutions de KBr de concentration valant respectivement 5 %, 10 %, 15 %, 30 % afin d'obtenir une teneur en additif déposé de, respectivement, 1,2 %, 2,3 %, et 4,6 %. La sépiolite ainsi dopée selon l'invention est placée dans un réacteur maintenu à une température fixe de 130°C. La capacité d'abattement du mercure est respectivement de 33, 44 et 75 (µg Hg) /g de sépiolite dopée dans les conditions de l'essai.

De manière surprenante, on constate que le dopage selon l'invention n'altère pas de façon significative la surface spécifique et le volume poreux initiaux du composé minéral non dopé, dans l'intervalle de concentration et avec le dopant considéré, ce qui laisse prévoir la conservation des performances d'abattement des dioxines. Par contre, on observe un accroissement significatif de l'abattement en mercure pour une concentration croissante en sel d'halogénure de la sépiolite dopée. Les résultats sont synthétisés au Tableau 2 ci-dessous.

**Tableau 2 - Evolution de la surface spécifique, du volume poreux et de l'abattement du mercure, en fonction de la teneur en additif de dopage**

| Teneur en additif | Surface spécifique | Volume poreux | Abattement mercure |
|---|---|---|---|
| (%) | (m²/g) | (cm³/g) | (µg Hg/g) |
| 0 | 136 | 0.26 | 9 |
| 1,2 | 133 | 0.25 | 33 |
| 2,3 | 132 | 0.24 | 44 |
| 4,6 | 130 | 0.23 | 75 |

### Exemple 8 - échelle industrielle

Selon l'invention, on dope de la sépiolite analogue à celle de l'exemple comparatif par pulvérisation dans un mélangeur industriel. A cette fin, on pulvérise une solution aqueuse d'une teneur de 20 % en poids de KBr par rapport au poids de la solution aqueuse. Le débit de sépiolite dopée, humide à 17%, est de 200 kg/h. Cette dernière est désagglomérée et séchée dans un broyeur/sécheur à cage (*cage mill*), à l'aide de gaz chauds à environ 400-450°C et un temps de séjour tel que les gaz sortent du broyeur/sécheur à environ 150°C. On obtient une sépiolite selon l'invention, séchée et à 5 % en poids de KBr par rapport au poids de la composition.

On utilise la sépiolite ainsi dopée dans une ligne de traitement de 7 t/h de déchets d'un incinérateur de déchets ménagers, produisant environ 43 000 Nm³/h de fumées à traiter. La sépiolite dopée est dosée au moyen d'une vis et injectée de manière pneumatique dans le courant gazeux à 150°C à raison de 3 kg/h, puis collectée dans un filtre à manches, notamment avec les poussières de combustion.

On a mesuré les concentrations en mercure en amont du point d'injection de la sépiolite dopée et en aval du filtre à manches par absorption atomique (MERCEM de Sick-Maihak). Les concentrations mesurées, normalisées sur gaz secs et rapportées à 11 % d'oxygène sont de :
- 85 µg/Nm³ en amont et
- 14 µg/Nm³ en aval du filtre à manches. Ce résultat est nettement inférieur à la réglementation en vigueur de 50 µg/Nm³ et témoigne d'un taux d'abattement en mercure de 84 %.

En même temps que la mesure de la teneur en mercure, la teneur en dioxines a été mesurée à la cheminée, par un organisme agréé, selon les normes EN 1948 (1997) et ISO 9096 (2003). La valeur obtenue est 0,04 ng TEQ/Nm³ sur gaz secs et ramené à une concentration de 11 % d'O₂. Ce résultat respecte parfaitement la réglementation à l'émission de 0,1 ng TEQ/Nm³ sec, ramené à 11 % d'O₂.

### Exemple 9 - échelle industrielle

On utilise la même sépiolite dopée qu'à l'exemple 8 dans une ligne de traitement de 7 t/h de déchets d'un incinérateur de déchets ménagers, produisant environ 43 000 Nm³/h de fumées à traiter. La sépiolite dopée est dosée au moyen de vis et injectée de manière pneumatique dans le courant gazeux à 180°C à raison de 8 kg/h, puis collectée dans un filtre à manches, notamment avec les poussières de combustion.

On a mesuré les concentrations en mercure en aval du filtre à manches par absorption atomique (MERCEM de Sick-Maihak). Les concentrations en mercure mesurées, normalisées sur gaz secs et rapportées à 11 % d'oxygène sont de 0,1 µg/Nm³ à 0,8 µg/Nm³. Ces résultats sont nettement inférieurs à la réglementation en vigueur de 50 µg/Nm³.

La teneur en dioxines a été mesurée à la cheminée, par un organisme agréé, selon les normes EN 1948 (1997) et ISO 9096 (2003). Elle est de 0,003 ng TEQ /Nm³ sur gaz secs et ramené à une concentration de 11 % d'O₂. et respecte parfaitement la réglementation à l'émission de 0,1 ng TEQ/Nm³ sec, ramené à 11 % d'O₂.

Il doit être entendu que la présente invention n'est en aucune façon limitée aux modes de réalisation décrits ci-dessus et que bien des modifications peuvent y être apportées sans sortir du cadre des revendications annexées.

## Revendications

1. Composition d'abattement de métaux lourds et de dioxines dans les gaz de fumées comprenant une matière solide de sorption qui est un composé minéral, de préférence non fonctionnalisé, **caractérisé en ce que** ledit composé minéral est choisi parmi les phyllosilicates du groupe "palygorskite-sépiolite" selon la classification de Dana, ledit composé minéral étant dopé par un sel d'halogénure et conservant sa structure cristalline initiale, ledit sel d'halogénure étant présent en une quantité sur base sèche allant de 0,5 % à 20 % en poids sur la base du poids de la composition.

2. Composition selon la revendication 1, dans laquelle ledit composé minéral est choisi dans le groupe des phyllosilicates du sous-groupe de la sépiolite selon la classification de Dana.

3. Composition selon la revendication 1 ou la revendication 2, dans laquelle ledit sel d'halogénure est un halogénure alcalin, un halogénure alcalino-terreux ou analogue, de préférence choisi dans le groupe constitué de NaCl, NaBr, Nal, KCI, KBr, KI, CaCl₂, CaBr₂, Cal₂, MgCl₂, MgBr₂, Mgl₂, NH₄Cl, NH₄Br ou NH₄I ou leurs mélanges.

4. Composition selon l'une quelconque des revendications précédentes, dans laquelle ledit sel d'halogénure est présent en une quantité sur base sèche allant de 1 % à 15 % en poids et en particulier de 1,5 % à 10 % en poids de sel d'halogénure sur la base du poids de la composition.

5. Composition selon l'une quelconque des revendications précédentes, dans laquelle le composé minéral dopé par ledit sel d'halogénure présente une surface spécifique BET comprise entre 70 et 170 m²/g, de préférence entre 80 et 140 m²/g et de manière plus préférentielle entre 90 et 130 m²/g.

6. Composition selon l'une quelconque des revendications précédentes, dans laquelle ledit composé minéral dopé par ledit sel d'halogénure présente un volume poreux compris entre 0,15 et 0,32 cm³/g, de préférence entre 0,20 et 0,30 cm³/g et de manière plus préférentielle entre 0,22 et 0,28 cm³/g, mesuré par la méthode BJH, appliquée à l'isotherme de désorption d'azote.

7. Procédé de fabrication d'une composition d'abattement de métaux lourds et de dioxines selon l'une quelconque des revendications 1 à 6, comprenant les étapes de :
- alimentation d'une matière solide de sorption qui est un composé minéral, de préférence non fonctionnalisé, choisi parmi les phyllosilicates du groupe "palygorskite-sépiolite" selon la classification de Dana,
- alimentation en un sel d'halogénure, et
- mise en contact, dudit composé minéral et dudit sel d'halogénure avec formation d'un composé minéral dopé au sel d'halogénure.

8. Procédé selon la revendication 7, dans lequel ladite mise en contact dudit composé minéral et dudit sel d'halogénure est réalisée sous agitation.

9. Procédé selon la revendication 7 ou la revendication 8, dans lequel ledit composé minéral alimenté présente une humidité comprise entre 0,1 et 100 g/kg, avantageusement entre 2 et 90 g/kg.

10. Procédé selon l'une quelconque des revendications 7 à 9, dans lequel ladite mise en contact est effectuée à température ambiante.

11. Procédé selon l'une quelconque des revendications 7 à 10, dans lequel ledit sel d'halogénure est sous forme liquide, en phase aqueuse.

12. Procédé selon l'une quelconque des revendications 7 à 11, dans lequel ladite étape de mise en contact dudit composé minéral et dudit sel d'halogénure est une pulvérisation dudit sel d'halogénure sur ledit composé minéral éventuellement sous agitation.

13. Procédé selon la revendication 11, dans lequel ladite étape de mise en contact, dudit composé minéral et dudit sel d'halogénure est un trempage dudit composé minéral dans ledit sel d'halogénure en phase liquide, éventuellement sous agitation.

14. Procédé selon l'une quelconque des revendications 11 à 13, dans lequel ledit sel d'halogénure en phase liquide est une solution, aqueuse, présentant une teneur en sel d'halogénure comprise entre 1 % et 30 %, en particulier entre 5% et 27%, de préférence entre 10% et 27 % en poids par rapport au poids total de ladite solution.

15. Procédé selon l'une des revendications 7 à 14, comprenant en outre une ou plusieurs étapes de séchage et/ou de désagglomération dudit composé minéral dopé au sel d'halogénure, de préférence à une température comprise entre 60 et 200°C, en particulier entre 75 et 170°C.

16. Procédé selon l'une quelconque des revendications 7 à 15, dans lequel ledit se! d'halogénure est un halogénure alcalin, un halogénure alcalino-terreux ou analogue, de préférence choisi dans le groupe constitué de NaCl, NaBr, Nal, KCI, KBr, KI, CaCl₂, CaBr₂, Cal₂, MgCl₂, MgBr₂, Mgl₂, NH₄Cl, NH₄Br ou NH₄I ou leurs mélanges.

17. Utilisation de la composition selon l'une quelconque des revendications 1 à 6, pour l'abattement des dioxines et des métaux lourds, de préférence à l'état gazeux, en particulier de mercure et tout particulièrement de mercure Hg° dans les gaz de fumées.

18. Utilisation selon la revendication 17, en mélange avec un réactif basique tel que de la chaux.

## Patentansprüche

1. Zusammensetzung zur Minderung von Schwermetallen und Dioxinen in Rauchgasen, welche ein festes Sorptionsmaterial umfasst, das eine Mineralverbindun ist, bevorzugt nicht funktionalisiert, **dadurch gekennzeichnet, dass** die erwähnte Mineralverbindung aus den Schichtsilikaten der Gruppe "Palygorskit-Sepiolith" nach der Klassifikation von Dana ausgewählt ist, diese erwähnte Mineralverbindung mit einem Halogenidsalz dotiert ist und ihre ursprüngliche kristalline Struktur behaltend, besagtes Halogenidsalz in einer Menge auf Trockenbasis reichend von 0,5 bis 20 Gew.-% auf Basis des Gewichts der Zusammensetzung anwesend ist.

2. Zusammensetzung nach Anspruch 1, wobei die erwähnte Mineralverbindung aus der Gruppe der Schichtsilikate der Untergruppe Sepiolith nach der Klassifikation von Dana ausgewählt ist.

3. Zusammensetzung nach Anspruch 1 oder Anspruch 2, wobei das erwähnte Halogenidsalz ein alkalisches Halogenid, ein alkalisch-erdiges Halogenid oder analoges ist, bevorzugt ausgewählt aus der Gruppe bestehend aus NaCl, NaBr, NaI, KCl, KBr, KI, CaCl₂, CaBr₂, Cal₂, MgCl₂, MgBr₂, MgI₂, NH₄Cl, NH₄Br oder NH₄I oder Mischungen daraus.

4. Zusammensetzung nach irgendeinem der vorigen Ansprüche, wobei das erwähnte Halogenidsalz in einer Menge auf Trockenbasis reichend von 1 bis 15 Gew.-% und insbesondere von 1,5 bis 10 Gew.-% Halogenidsalz auf Basis des Gewichts der Zusammensetzung anwesend ist.

5. Zusammensetzung nach irgendeinem der vorigen Ansprüche, wobei die mit dem erwähnten Halogenidsalz dotierte Mineralverbindung eine spezifische Oberfläche nach BET von zwischen 70 und 170 m²/g aufweist, bevorzugt zwischen 80 und 140 m²/g und noch besser zwischen 90 und 130 m²/g.

6. Zusammensetzung nach irgendeinem der vorigen Ansprüche, wobei die erwähnte, mit dem erwähnten Halogenidsalz dotierte Mineralverbindung ein Porenvolumen zwischen 0,15 und 0,32 cm³/g aufweist, bevorzugt zwischen 0,20 und 0,30 cm³/g und noch besser zwischen 0,22 und 0,28 cm³/g, gemessen nach der BJH-Methode, angewendet auf die Desorptionsisotherme von Stickstoff.

7. Verfahren zur Herstellung einer Zusammensetzung zur Minderung von Schwermetallen und Dioxinen nach irgendeinem der Ansprüche 1 bis 6, welches die Schritte umfasst:
- Bereitstellen eines festen Sorptionsmaterials, das eine Mineralverbindung ist, bevorzugt nicht funktionalisiert, ausgewählt aus den Schichtsilikaten der Gruppe "Palygorskit-Sepiolith" nach der Klassifikation von Dana,
- Bereitstellen eines Halogenidsalzes, und
- Inkontaktbringen der erwähnten Mineralverbindung und des erwähnten Halogenidsalzes mit Bildung einer mit dem Halogenidsalz dotierten Mineralverbindung.

8. Verfahren nach Anspruch 7, wobei das erwähnte Inkontaktbringen der erwähnten Mineralverbindung und des erwähnten Halogenidsalzes unter Rühren erfolgt.

9. Verfahren nach Anspruch 7 oder Anspruch 8, wobei die erwähnte zugeführte Mineralverbindung eine Feuchtigkeit zwischen 0,1 und 100 g/kg aufweist, vorteilhafterweise zwischen 2 und 90 g/kg.

10. Verfahren nach irgendeinem der Ansprüche 7 bis 9, wobei das erwähnte Inkontaktbringen bei Raumtemperatur erfolgt.

11. Verfahren nach irgendeinem der Ansprüche 7 bis 10, wobei das erwähnte Halogenidsalz in flüssiger Form vorliegt, in einer wässrigen Phase.

12. Verfahren nach irgendeinem der Ansprüche 7 bis 11, wobei der erwähnte Schritt des Inkontaktbringens der erwähnten Mineralverbindung und des erwähnten Halogenidsalzes ein Aufsprühen des erwähnten Halogenidsalzes auf die erwähnte Mineralverbindung wahlweise unter Rühren ist.

13. Verfahren nach Anspruch 11, wobei der erwähnte Schritt des Inkontaktbringens der erwähnten Mineralverbindung und des erwähnten Halogenidsalzes ein Einweichen der erwähnten Mineralverbindung in das erwähnte Halogenidsalz in Flüssigphase ist, eventuell unter Schütteln.

14. Verfahren nach irgendeinem der Ansprüche 11 bis 13, wobei das erwähnte Halogenidsalz in Flüssigphase eine wässrige Lösung mit einem Gehalt an Halogenidsalz zwischen 1 und 30 Gew.-% ist, insbesondere zwischen 5 und 27 Gew.-%, bevorzugt zwischen 10 und 27 Gew.-% bezogen auf das Gesamtgewicht der erwähnten Lösung.

15. Verfahren nach einem der Ansprüche 7 bis 14, welches ferner einen oder mehrere Schritte zur Trocknung und/oder zur Desagglomeration der erwähnten, mit dem Halogenidsalz dotierten Mineralverbindung umfasst, bevorzugt bei einer Temperatur zwischen 60 und 200 °C, insbesondere zwischen 75 und 170 °C.

16. Verfahren nach irgendeinem der Ansprüche 7 bis 15, wobei das erwähnte Halogenidsalz ein alkalisches Halogenid, ein alkalisch-erdiges oder dergleichen ist, bevorzugt ausgewählt aus der Gruppe bestehend aus NaCl, NaBr, NaI, KCl, KBr, KI, CaCl₂, CaBr₂, CaI₂, MgCl₂, MgBr₂, MgI₂, NH₄Cl, NH₄Br oder NH₄I oder Mischungen daraus.

17. Verwendung der Zusammensetzung nach irgendeinem der Ansprüche 1 bis 6, zur Minderung an Dioxinen und Schwermetallen, bevorzugt in gasförmigem Zustand, insbesondere von Quecksilber und speziell von Quecksilber Hg°, in den Rauchgasen.

18. Verwendung nach Anspruch 17, in Mischung mit einem basischen Reagenz wie Kalk.

## Claims

1. A composition for abatement of heavy metals and dioxins in flue gases comprising a solid sorption material which is a mineral compound, preferably non-functionalized, **characterized in that** said mineral compound is selected from among phyllosilicates of the « palygorskite-sepiolite » group according to the Dana classification, said mineral compound being doped with a halide salt and keeping its initial crystalline structure, said halide salt being present in an amount on a dry basis ranging from 0.5% to 20% by weight of based on the weight of the composition.

2. The composition according to claim 1, wherein said mineral compound is selected from the group of phyllosilicates of the sub-group of sepiolite according to the Dana classification.

3. The composition according to claim 1 or claim 2, wherein said halide salt is an alkaline halide, an alkaline-earth halide or the like, preferably selected from among the group formed by NaCl, NaBr, NaI, KCl, KBr, KI, CaCl₂, CaBr₂, CaI₂, MgCl₂, MgBr₂, MgI₂, NH₄Cl, NH₄Br or NH₄I, or mixtures thereof.

4. The composition according to any of the preceding claims, wherein said halide salt is present in an amount on a dry basis ranging from 1% to 15% by weight and in particular from 1.5% to 10% by weight of halide salt on the basis of the weight of the composition.

5. The composition according to any of the preceding claims, wherein the mineral compound doped with said halide salt has a BET specific surface area comprised between 70 and 170 m²/g, preferably between 80 and 140 m²/g and more preferentially between 90 and 130 m²/g.

6. The composition according to any of the preceding claims, wherein said mineral compound doped with said halide has a pore volume comprised between 0.15 and 0.32 cm³/g, preferably between 0.20 and 0.30 cm³/g and more preferentially between 0.22 and 0.28 cm³/g, measured by the BJH method applied to the nitrogen desorption isotherm.

7. A method for making an abatement composition for heavy metals and dioxins according to any of claims 1 to 6, comprising the steps of:
- providing a solid sorption material which is a mineral compound, preferably non-functionalized, selected from among the phyllosilicates of the « palygorskite-sepiolite » group according to the Dana classification,
- providing a halide salt, and
- putting into contact, said mineral compound and said halide salt with formation of a mineral compound doped with the halide salt.

8. The method according to claim 7, wherein said contacting of said mineral compound and of said halide salts is achieved with stirring.

9. The method according to claims 7 or claim 8, wherein said provided mineral compound has humidity comprised between 0.1 and 100 g/kg, advantageously between 2 and 90 g/kg.

10. The method according to any of claims 7 to 9, wherein said contacting is carried out at room temperature.

11. The method according to any of claims 7 to 10, wherein said halide salt is in liquid form, in an aqueous phase.

12. The method according to any of claims 7 to 11, wherein said contacting step of said mineral compound and of said halide salt is spraying of said halide salt on said mineral compound optionally with stirring.

13. The method according to claim 11, wherein said contacting step, of said mineral compound and of said halide salt is soaking of said mineral compound in said halide salt in a liquid phase, optionally with stirring.

14. The method according to any of claims 11 to 13, wherein said halide salt in a liquid phase is an aqueous solution having a halide salt content comprised between 1% and 30%, in particular between 5 and 27%, preferably between 10 and 27% by weight based on the total weight of said solution.

15. The method according to one of claims 7 to 14, further comprising one or several steps for drying and/or deagglomerating said mineral compound doped with a halide salt, preferably at a temperature comprised between 60 and 200°C, in particular between 75 and 170°C.

16. The method according to any of claims 7 to 15, wherein said halide salt is an alkaline halide, and alkaline-earth halide or the like, preferably selected from the group consisting of NaCl, NaBr, NaI, KCl, KBr, KI, CaCl₂, CaBr₂, CaI₂, MgCl₂, MgBr₂, MgI₂, NH₄Cl, NH₄Br or NH₄I, or mixtures thereof.

17. The use of the composition according to any of claims 1 to 6, for abatement of the dioxins and of the heavy metals, preferably in the gas state, in particular mercury and most particularly Hg° in flue gases.

18. The use according to claim 17, in a mixture with a basic reagent such as lime.
